# EUROPEAN PATENT APPLICATION

(11) **EP 4 422 265 A1**
(43) Date of publication of application: **28.08.2024**
(21) Application number: 21961071.4
(22) Date of filing: 22.10.2021
(51) Int. Cl.: H04W 28/02, H04W 76/27

(54) **COMMUNICATION MODE DETERMINATION METHOD AND APPARATUS THEREOF**

(71) Applicant: Beijing Xiaomi Mobile Software Co., Ltd., Beijing 100085 (CN)
(72) Inventor: CHI, Liangang, Beijing 100085 (CN); JI, Siwei, Beijing 100085 (CN)
(74) Representative: Hughes, Andrea Michelle
(86) International application number: PCT/CN2021/125798
(87) International publication number: WO 2023/065326

(57) **Abstract**

Embodiments of the present application disclose a communication mode determination method, which may be used in the technical field of communications. The method executed by a network device comprises: receiving first indication information sent by an access network device, the first indication information being used to indicate a communication mode supported by the access network device; determining a communication mode to be used according to the communication mode supported by the access network device and a communication mode supported by the network device. In this manner, an optimal communication mode can be used in different scenarios, thereby improving the capability of a communication system and improving data transmission performance.

## Description

### TECHNICAL FIELD

The present disclosure relates to a field of communication technologies, and particularly to a method and an apparatus for determining a communication mode.

### BACKGROUND

With continuous development of wireless communication, users have higher and higher requirements for a communication capability of a communication system. Usually, in addition to developing a high frequency band, the communication capability may be enhanced by improving spectrum efficiency, for example, by adopting a communication mode of orbital angular momentum (OAM).

However, the communication mode of the OAM has different communication capabilities in different use scenarios. Therefore, it is an urgent problem to be solved how to improve a communication capability of a communication system.

### SUMMARY

A method and an apparatus for determining a communication mode are provided according to embodiments of the disclosure, which may perform communication using different data transmission modes in different scenarios, which further improves a data transmission performance of a communication system.

In a first aspect, a method for determining a communication mode is provided according to embodiments of the present disclose. The method is performed by a network device. The method includes: receiving first indication information from an access network device, in which the first indication information indicates a communication mode supported by the access network device; and determining a communication mode to be used according to the communication mode supported by the access network device and a communication mode supported by the network device.

In the technical solution, the network device may receive first indication information and determine the communication mode to be used according to the communication mode supported by the access network device and the communication mode supported by the network device itself in the first indication information. In this way, an optimal communication mode may be adopted in different scenarios, which further improves the capability of the communication system, and enhances the data transmission performance.

Optionally, the method further includes: in response to the access network device supporting one type of communication mode, determining the communication mode to be used according to the communication mode supported by the access network device and the communication mode supported by the network device.

Optionally, the method further includes: in response to the access network device and the network device supporting a plurality of types of communication modes, sending second indication information, in which the second indication information indicates the communication mode supported by the network device; receiving third indication information, in which the third indication information indicates a communication mode recommended by the access network device; and determining the communication mode to be used according to the communication mode recommended.

Optionally, the method further includes: sending the second indication information via a single antenna port.

Optionally, the method further includes: sending fourth indication information, in which the fourth indication information indicates the access network device to perform data transmission based on the communication mode to be used.

Optionally, the method further includes: sending fifth indication information, in which the fifth indication information indicates a use occasion of the communication mode to be used.

Optionally, the method further includes: receiving the first indication information from the access network device based on a physical uplink shared channel (PUSCH).

In a second aspect, another method for determining a communication mode is provided according to embodiments of the disclosure. The method is performed by an access network device. The method includes: sending first indication information, in which the first indication information indicates a communication mode supported by an access network device.

In the technical solution, the access network device sends the first indication information for indicating the communication mode supported by the access network device itself, and the network device may determine the communication mode to be used according to the communication mode supported by the access network device and the communication mode supported by the network device itself in the first indication information after receiving the first indication information. In this way, the optimal communication mode may be adopted in different scenarios, which further improves the capability of the communication system, and enhances the data transmission performance.

Optionally, the method further includes: receiving second indication information, in which the second indication information indicates a communication mode supported by a network device; determining a recommended communication mode according to a current channel state and the communication mode supported by the network device; and sending third indication information, in which the third indication information indicates a communication mode recommended by the access network device.

Optionally, the method further includes: receiving fourth indication information, in which the fourth indication information indicates performing data transmission based on a communication mode to be used.

Optionally, the method further includes: receiving fifth indication information, in which the fifth indication information indicates a use occasion of the communication mode to be used.

Optionally, the method further includes: sending the first indication information based on a PUSCH.

Optionally, the method further includes: sending the first indication information via a single antenna port.

In a third aspect, a communication apparatus is provided at a network device side according to embodiments of the present disclosure. The apparatus includes: a transceiving module, configured to receive first indication information from an access network device, in which the first indication information indicates a communication mode supported by the access network device; and a processing module, configured to determine a communication mode to be used according to the communication mode supported by the access network device and a communication mode supported by a network device.

Optionally, the processing module is specifically configured to: in response to the access network device supporting one type of communication mode, determine the communication mode to be used according to the communication mode supported by the access network device and the communication mode supported by the network device.

Optionally, the transceiving module is specifically configured to: in response to the access network device and the network device supporting a plurality of types of communication modes, send second indication information, in which the second indication information indicates the communication mode supported by the network device; and receive third indication information, in which the third indication information indicates a communication mode recommended by the access network device. The processing module is specifically configured to determine the communication mode to be used according to the communication mode recommended.

Optionally, the transceiving module is specifically configured to: send the second indication information via a single antenna port.

Optionally, the transceiving module is specifically configured to: send fourth indication information, in which the fourth indication information indicates the access network device to perform data transmission based on the communication mode to be used.

Optionally, the transceiving module is specifically configured to: send fifth indication information, in which the fifth indication information indicates a use occasion of the communication mode to be used.

Optionally, the transceiving module is specifically configured to: receive the first indication information from the access network device based on a PUSCH.

In a fourth aspect, another communication apparatus is provided at an access network device side according to embodiments of the present disclosure. The apparatus includes: a transceiving module, configured to send first indication information, in which the first indication information indicates a communication mode supported by the access network device.

Optionally, the transceiving module is specifically configured to: receive second indication information, in which the second indication information indicates a communication mode supported by a network device. A processing module is configured to determine a recommended communication mode according to a current channel state and the communication mode supported by the network device. The transceiving module is then configured to send third indication information, in which the third indication information indicates a communication mode recommended by the access network device.

Optionally, the transceiving module is specifically configured to: receive fourth indication information, in which the fourth indication information indicates performing data transmission based on a communication mode to be used.

Optionally, the transceiving module is specifically configured to: receive fifth indication information, in which the fifth indication information indicates a use occasion of the communication mode to be used.

Optionally, the transceiving module is specifically configured to: send the first indication information based on a PUSCH.

Optionally, the transceiving module is specifically configured to: send the first indication information via a single antenna port.

In a fifth aspect, a communication device including a processor is provided according to embodiments of the disclosure. When the processor calls a computer program in a memory, the method according to the first aspect is performed.

In a sixth aspect, a communication device including a processor is provided according to embodiments of the disclosure. When the processor calls a computer program in a memory, the method according to the second aspect is performed.

In a seventh aspect, a communication device is provided according to embodiments of the disclosure. The communication device includes a processor and a memory storing a computer program. When the computer program is executed by the processor, the communication device is caused to perform the method according to the first aspect.

In an eighth aspect, a communication device is provided according to embodiments of the disclosure. The communication device includes a processor and a memory storing a computer program. When the computer program is executed by the processor, the communication device is caused to perform the method according to the second aspect.

In a ninth aspect, a communication device is provided according to embodiments of the disclosure. The communication device includes a processor and an interface circuit. The interface circuit is configured to receive code instructions and transmit the code instructions to the processor; and the processor is configured to run the code instructions so that the communication device performs the method according to the above first aspect.

In a tenth aspect, a communication device is provided according to embodiments of the disclosure. The device includes a processor and an interface circuit. The interface circuit is configured to receive code instructions and transmit the code instructions to the processor; and the processor is configured to run the code instructions so that the communication device performs the method according to the above second aspect.

In an eleventh aspect, a system for determining a communication mode is provided according to embodiments of the disclosure. The system includes the communication apparatus according to the third aspect and the communication apparatus according to the fourth aspect. Alternatively, the system includes the communication device according to the fifth aspect and the communication device according to the sixth aspect. Alternatively, the system includes the communication device according to the seventh aspect and the communication device according to the eighth aspect. Alternatively, the system includes the communication device according to the ninth aspect and the communication device according to the tenth aspect.

In a twelfth aspect, a computer-readable storage medium storing instructions used by the terminal device is provided according to embodiments of the present disclosure. When the instructions are executed, the terminal device is caused to perform the method according to the first aspect.

In a thirteenth aspect, a computer-readable storage medium storing instructions used by the network device is provided according to embodiments of the present disclosure. When the instructions are executed, the network device is caused to perform the method according to the second aspect.

In a fourteenth aspect, a computer program product including a computer program is provided according to embodiments of the present disclosure. When the computer program is running on a computer, the computer is caused to perform the method according to the first aspect.

In a fifteenth aspect, a computer program product including a computer program is further provided according to embodiments of the present disclosure. When the computer program is running on a computer, the computer is caused to perform the method according to the second aspect.

In a sixteenth aspect, a system on chip (SOC) is provided in the disclosure. The SOC includes at least one processor and an interface, to support a terminal device to perform functions involved in the first aspect, for example, to determine or process at least one of data and information involved in the above methods. In a possible design, the SOC further includes a memory. The memory is configured to save a computer program and data required by the terminal device. The SoC may be consisted of a chip, or may include a chip and other discrete devices.

In a seventeenth aspect, a SOC is provided in the disclosure. The SOC includes at least one processor and an interface, to support a network device to perform functions involved in the second aspect, for example, to determine or process at least one of data and information involved in the above methods. In a possible design, the SOC further includes a memory. The memory is configured to save a computer program and data required by the network device. The SoC may be consisted of a chip, or may include a chip and other discrete devices.

In an eighteenth aspect, a computer program is provided in the present disclosure. When the computer program is running on a computer, the computer is caused to perform the method according to the first aspect.

In a nineteenth aspect, a computer program is provided in the present disclosure. When the computer program is running on a computer, the computer is caused to perform the method according to the second aspect.

### BRIEF DESCRIPTION OF THE DRAWINGS

In order to explain technical solutions in the embodiments of the disclosure or technical solutions in the related art more clearly, the drawings needed in the embodiments of the disclosure or in the related art will be briefly introduced below.
FIG. 1 is an architecture diagram illustrating a communication system according to embodiments of the present disclosure.
FIG. 2 is a flowchart illustrating a method for determining a communication mode according to embodiments of the present disclosure.
FIG. 3 is a flowchart illustrating another method for determining a communication mode according to embodiments of the present disclosure.
FIG. 4 is a flowchart illustrating another method for determining a communication mode according to embodiments of the present disclosure.
FIG. 5 is a flowchart illustrating another method for determining a communication mode according to embodiments of the present disclosure.
FIG. 6 is a flowchart illustrating another method for determining a communication mode according to embodiments of the present disclosure.
FIG. 7 is a flowchart illustrating another method for determining a communication mode according to embodiments of the present disclosure.
FIG. 8 is a flowchart illustrating another method for determining a communication mode according to embodiments of the present disclosure.
FIG. 9 is a flowchart illustrating another method for determining a communication mode according to embodiments of the present disclosure.
FIG. 10 is a structural diagram illustrating a communication apparatus according to embodiments of the present disclosure.
FIG. 11 is a structural diagram illustrating another communication apparatus according to embodiments of the present disclosure.
FIG. 12 is a structural diagram illustrating a chip according to embodiments of the present disclosure.

### DETAILED DESCRIPTION

For convenience of understanding, the terms involved in the disclosure are introduced first.

### 1. Orbital angular momentum (OAM)

Orbital angular momentum (OAM), independent of conventional modulation dimensions such as phase, frequency and polarization, is considered as a new modulation dimension. There are an infinite number of OAM modes carried by vortex electromagnetic waves theoretically, and OAM beams with different integer eigenvalues are orthogonal to each other, which may infinitely enhance the spectrum efficiency theoretically.

### 2. Multiple-in multipleout (MIMO)

Multiple-in multipleout (MIMO) use a plurality of antennas at a transmitter and a receiver to constitute an antenna system having a plurality of channels between the transmitter and the receiver in order to greatly improve a channel capacity. The MIMO system has extremely high spectrum utilization efficiency, obtains gains in two aspects (i.e., reliability and effectiveness) using spatial resources on the basis of fully utilizing the existing spectrum resources, and has a cost of increasing the processing complexity of the transmitter and the receiver. Massive MIMO technology uses a large number of antennas to serve a relatively small number of users, which may effectively improve the spectrum efficiency.

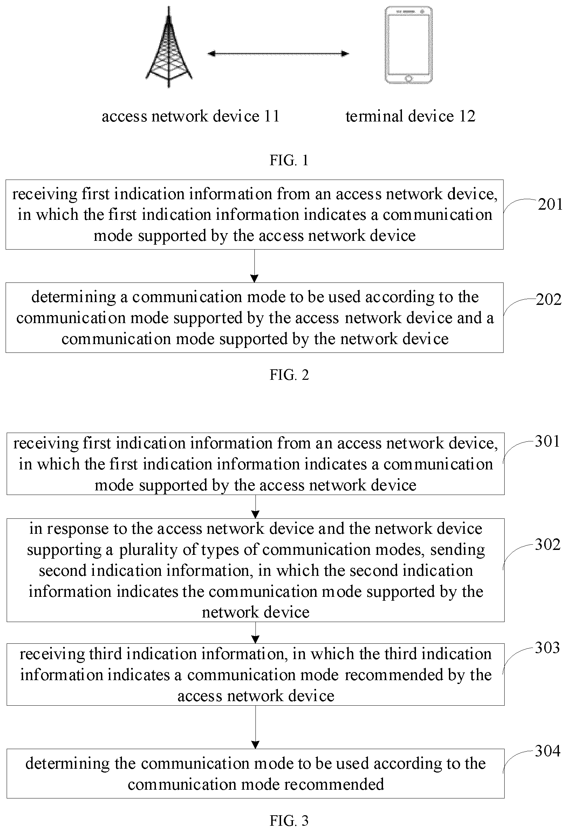

As illustrated in FIG. 1, FIG. 1 is an architecture diagram illustrating a communication system according to embodiments of the present disclosure. The communication system may include, but is not limited to, one network device and one terminal device, a number and a form of the devices shown in FIG. 1 are only as examples and do not constitute a limitation to the embodiments of the present disclosure, and two or more network devices and two or more terminal devices may be included in practical applications. The communication system as illustrated in FIG. 1 includes one network device 11 and one terminal device 12 for example.

It needs to be noted that the technical solutions in embodiments of the present disclosure is applicable to various communication systems, for example, a long term evolution (LTE) system, a 5th generation (5G) mobile communication system, a 5G new radio (NR) system or other future new mobile communication systems.

The network device 11 in embodiments of the disclosure is an entity for transmitting or receiving a signal at a network side. For example, the network device 101 may be an evolved NodeB (eNB), a transmission reception point (TRP), a next generation NodeB (gNB) in a NR system, a base station in other future mobile communication systems, or an access node in a wireless fidelity (Wi-Fi^{™}) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit. A protocol layer of a network device such as a base station may be split by using the CU-DU structure, the functions of a part of the protocol layer are placed in the CU for centralized control, and the functions of a remaining part or all of the protocol layer are distributed in the DU. Then, the DU is centrally controlled by the CU.

The terminal device 12 in embodiments of the disclosure is an entity for receiving or transmitting a signal at a user side, for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. A specific technology adopted by the terminal device and a specific device form adopted by the terminal device are not limited in embodiments of the present disclosure.

It may be understood that, the communication system described in embodiments of the present disclosure are intended to explain technical solutions of embodiments of the present disclosure more clearly, and does not constitute a limitation to the technical solutions provided by embodiments of the present disclosure. Those skilled in the art know that, with the evolution of a system architecture and the emergence of a new service scenario, the technical solutions provided in embodiments of the present disclosure are equally applied for similar technical problems.

A method and an apparatus for determining a communication mode in the disclosure are described in combination with accompanying drawings.

As illustrated in FIG. 2, FIG. 2 is a flowchart illustrating a method for determining a communication mode according to embodiments of the present disclosure. The method is performed by a network device. As illustrated in FIG. 2, the method may include but not limited to the following steps.

At step 201, first indication information is received from an access network device. The first indication information indicates a communication mode supported by the access network device.

The access network device may be a relay or a terminal device. The communication mode may include a MIMO mode based on beamforming, or an OAM mode, which is not limited in the disclosure.

Optionally, the first indication information from the access network device may be received based on a physical uplink shared channel (PUSCH).

Optionally, the communication mode supported by the access network device may be indicated by a preset bit value in the first indication information. For example, when the preset bit value is 01, it indicates that the access network device only supports the MIMO mode; when the preset bit value is 10, it indicates that the access network device only supports the OAM mode; or when the preset bit value is 11, it indicates that the access network device supports both the MIMO mode and the OAM mode, which will not be limited here.

At step 202, a communication mode to be used is determined according to the communication mode supported by the access network device and a communication mode supported by a network device.

The network device may be an eNB, or a gNB in a NR system.

In the disclosure, a different communication mode have a different data transmission efficiency in a different scenario. In order to ensure the high data transmission efficiency of the communication system in each scenario, a communication mode with the high data transmission efficiency may be selected for communication in different network environments according to the communication mode supported by the access network device, which enhances the data transmission performance of the communication system.

In the disclosure, after the network device receives the first indication information, the communication mode supported by the access network device is determined first according to the first indication information. When both the access network device and the network device support a certain communication mode, such communication mode may be determined as a communication mode to be used.

Optionally, there may be one or more communication modes to be used.

Optionally, if the network device determines there are a plurality of communication modes to be used according to the communication mode supported by the access network device and the communication mode supported by the network device itself, a final communication mode to be used may be determined according to preset priorities of the plurality of communication modes in the network device.

For example, the first indication information indicates that the network access device supports both the MIMO mode and the OAM mode, and the network device also supports both the MIMO mode and the OAM mode. When the network device preconfigures the priority of the OAM mode is higher than the priority of the MIMO mode, the OAM mode may be determined as the communication mode to be used.

By implementing embodiments of the disclosure, after the network device receives the first indication information, the communication mode to be used may be determined according to the communication mode supported by the access network device and the communication mode by the network device itself. An optimal communication mode may be adopted in different scenarios, which further improves the capability of the communication system, and enhances the data transmission performance.

FIG. 3 is a flowchart illustrating another method for determining a communication mode according to embodiments of the present disclosure. As illustrated in FIG. 3, the method may be performed by a network device, and may include but not limited to the following steps.

At step 301, first indication information is received from an access network device. The first indication information indicates a communication mode supported by the access network device

In the embodiment, the implementation process of step 301 may refer to the detailed description of any one embodiment in the disclosure, which will not be repeated here.

At step 302, in response to the access network device and the network device supporting a plurality of types of communication modes, second indication information is sent. The second indication information indicates the communication mode supported by the network device.

In the disclosure, when the access network device and the network device support the plurality of types of communication modes, the network device may send the communication mode supported by the network device itself to the access network device, so that the access network device recommends an appropriate communication mode according to a channel condition. In this way, a communication mode with the high data transmission efficiency may be selected according to the channel condition, which further enhances the data transmission performance of the communication system.

Optionally, after the network device receives the first indication information, the communication mode supported by the access network device is determined according to the first indication information. When the access network device and the network device support the plurality of types of communication modes, the network device may send the second indication information to the access network device.

Optionally, when the access network device supports the plurality of types of communication modes, and the network device only supports one type of communication mode, if the communication modes supported by the access network device include the type of communication mode supported by the network device, it may be determined that the type of communication mode supported by the network device is the communication mode to be used.

Optionally, when the access network device supports the plurality of types of communication modes, and the network device only supports the type of communication mode, if the communication modes not supported by the access network device include the type of communication mode supported by the network device, it may be determined that reliable communication may not be performed between the access network device and the network device.

Optionally, a manner in which the second indication information indicates the communication mode supported by the network device may be the same as or different from a manner in which the first indication information indicates the communication mode supported by the access network device, which will not be limited in the disclosure.

Optionally, the network device may send the second indication information via a single antenna port. Since the robustness of the single antenna port is strongest, when the network device does not know a communication mode usable by the access network device, and the access network device does not know a communication mode usable by the network device, underlying transmission may be performed (i.e. using the single antenna port), which ensures the reliable transmission of the second indication information.

At step 303, third indication information is received. The third indication information indicates a communication mode recommended by the access network device.

In the disclosure, after the network device sends the second indication information, the access network device may determine a state of each channel via channel monitoring, to determine the communication mode recommended according to the state of each channel, and may indicate the communication mode recommended to the network device via the third indication information.

For example, the network device supports the MIMO mode. When the access network device monitors that the channel is multipath, that is, the current channel state is not an ideal channel state of the OAM mode, and the performance of an OAM-based communication system will degrade under a non-ideal condition, it may be thus determined that the communication mode recommended is the MIMO mode, and the third indication information may indicate to the network device that the communication mode recommended is the MIMO mode.

Alternatively, if the network device supports the MIMO mode and the OAM mode, when the access network device monitors the channel is that a channel model between the access network device and the network device is a line of sight (los), and an antenna between the access network device and the network device is in a coaxial parallel state, in which case the performance of the OAM communication mode is better, it may be thus determined that the communication mode recommended is the OAM mode, and the third indication information may indicate to the network device that the communication mode recommended is the OAM mode.

Optionally, a manner in which the third indication information indicates the communication mode recommend by the network device may be the same as or different from a manner in which the first indication information indicates the communication mode supported by the access network device, which will not be limited in the disclosure.

At step 304, the communication mode to be used is determined according to the communication mode recommended.

In the disclosure, the network device may determine the communication mode recommended as the communication mode to be used after determining the communication mode recommended by the access network device.

By implementing embodiments of the disclosure, when the network device receives the first indication information for indicating the communication mode supported by the access network device, and the access network device and the network device itself support the plurality of types of communication modes, the second indication information may be sent to the access network device, indicating the communication mode supported by the network device itself. After the third indication information for indicating the communication mode recommended from the network access device, the communication mode to be used may be determined. Therefore, the optimal communication mode may be determined according to a specific channel state, which further improves the capability of the communication system, and enhances the data transmission performance.

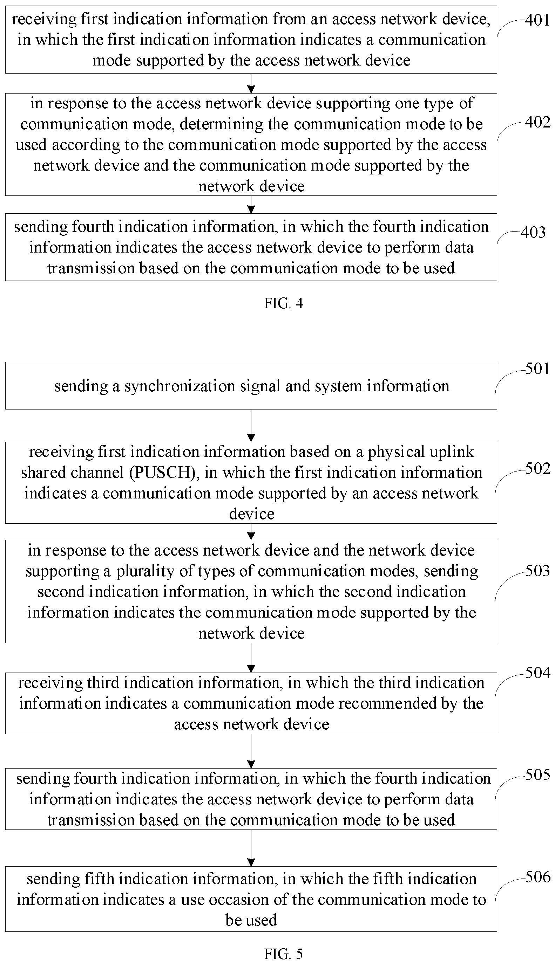

As illustrated in FIG. 4, FIG. 4 is a flowchart illustrating another method for determining a communication mode according to embodiments of the present disclosure. As illustrated in FIG. 4, the method may be performed by a network device, and may include but not limited to the following steps.

At step 401, first indication information is received from an access network device. The first indication information indicates a communication mode supported by the access network device.

In the embodiment, the implementation process of step 401 may refer to the detailed description of any one embodiment in the disclosure, which will not be repeated here.

At step 402, in response to the access network device supporting one type of communication mode, the communication mode to be used is determined according to the communication mode supported by the access network device and the communication mode supported by the network device.

In the disclosure, when the access network device only supports one type of communication mode, the network device may determine the communication mode to be used directly based on the communication mode supported by the network device itself and the communication mode supported by the access network device.

Optionally, after the network device receives the first indication information, it is determined that the access network device only supports one type of communication mode according to the first indication information and when the network device also supports such communication mode, it may be determined that such communication mode is the communication mode to be used.

Optionally, after the network device receives the first indication information, it is determined that the access network device only supports one type of communication mode according to the first communication mode, but the network device does not support such communication mode, it may be determined that reliable communication may not be performed between the access network device and the network device.

At step 403, fourth indication information is sent. The fourth indication information indicates the access network device to perform data transmission based on the communication mode to be used.

In the disclosure, after the communication mode to be used is determined, the network device may send the fourth indication information to the access network device, so as to indicate the access network device to perform data transmission based on the communication mode to be used. After the access network device receives the fourth indication information, the access network device may perform data transmission according to the communication mode indicated by the fourth indication information.

Optionally, a manner in which the fourth indication information indicates the communication mode to be used may be the same as or different from a manner in which the first indication information indicates the communication mode supported by the access network device, which will not be limited in the disclosure.

Optionally, the access network device may start data transmission with the network device using the indicated communication mode after receiving the fourth indication information, or, may start data transmission with the network device using the indicated communication mode, at a specified moment after receiving the fourth indication information, which will not be limited in the disclosure.

Optionally, the network device may further send fifth indication information to the access network device. The fifth indication information indicates a use occasion of the communication mode to be used. The use occasion in the fifth indication information may be a specific moment, or a specific time unit. The time unit may be a slot, a frame or a mini-slot, which will not be limited in the disclosure.

For example, when the use occasion in the fifth indication information is a certain moment t, the access network device may start to perform data transmission with the network device using the indicated communication mode at the moment t. Alternatively, when the use occasion in the fifth indication information includes n slots, the access network device may start to perform data transmission with the network device using the indicated communication mode after the n slots.

Optionally, the fourth indication information and the fifth indication information may be the same piece of indication information, or two different pieces of indication information. That is, the network device may simultaneously indicate the communication mode to be used and the use occasion of the communication mode via one piece of indication information, which will not be limited in the disclosure. By implementing embodiments of the disclosure, when the access network device only supports the one type of communication mode, the communication mode supported by the access network device in the first indication information may be determined as the communication mode to be used. In this way, the communication mode may be rapidly determined, and a stable operation of the communication system may be ensured, which further enhances the capability of the communication system.

As illustrated in FIG. 5, FIG. 5 is a flowchart illustrating another method for determining a communication mode according to embodiments of the present disclosure. As illustrated in FIG. 5, the method may be performed by a network device, and may include but not limited to the following steps.

At step 501, a synchronization signal and system information are sent.

The system information may include a master information block (MIB) and a series of system information blocks (SIBs), which will not be limited in the disclosure.

In the disclosure, the network device may send the synchronization signal and the system information via the single antenna port. When the access network device receives the synchronization signal and the system information, an access operation may be performed according to the synchronization signal and the system information.

At step 502, first indication information is received based on a PUSCH. The first indication information indicates a communication mode supported by an access network device.

In the disclosure, after the access network device receives the synchronization signal and the system information from the network device, the synchronization signal may be analyzed to determine synchronization information , and the system information may also be analyzed, to determine initial access information, and obtain basic information of other system information, for example, physical layer information required for system information, that is, configuration information of a control resource set (i.e., CORESET#0). Then, uplink timing synchronization with the network device may be performed based on a physical random access channel (PRACH), and first indication information for indicating the communication mode supported by the access network device may be sent to the network device based on the PUSCH.

In the disclosure, the network device may receive the first indication information by monitoring the PUSCH, after sending the synchronization signal and the system information to the access network device.

At step 503, in response to the access network device and the network device supporting a plurality of types of communication modes, second indication information is sent. The second indication information indicates the communication mode supported by the network device.

At step 504, the third indication information is received. The third indication information indicates a communication mode recommended by the access network device. Then, the communication mode to be used is determined according to the communication mode recommended.

At step 505, fourth indication information is sent. The fourth indication information indicates the access network device to perform data transmission based on the communication mode to be used.

At step 506, fifth indication information is sent. The fifth indication information indicates a use occasion of the communication mode to be used.

In the embodiment, implementation processes of steps 503 to 506 may refer to the detailed descriptions of any one embodiment in the disclosure, which will not be repeated here.

By implementing embodiments of the disclosure, the network device first sends the synchronization signal and the system information, and the access network device establishes a connection with the network device based on the synchronization signal and the system information. Then, the access network device receives the first indication information based on the PUSCH. In this way, the anti-interference capability of the channel may be improved, and the accuracy of information received by the communication system may be enhanced.

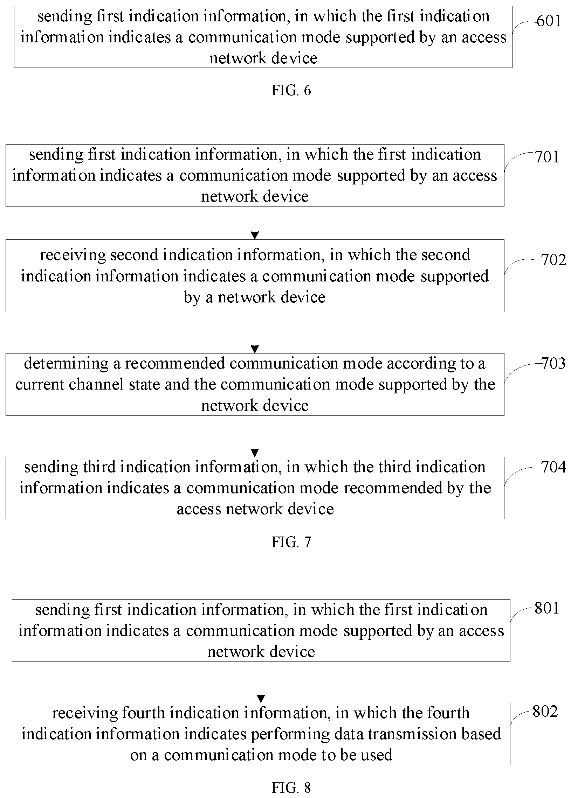

As illustrated in FIG. 6, FIG. 6 is a flowchart illustrating another method for determining a communication mode according to embodiments of the present disclosure. The method is performed by an access network device. As illustrated in FIG. 6, the method may include but not limited to the following steps.

At step 601, first indication information is sent. The first indication information indicates a communication mode supported by an access network device.

The access network device may be a relay or a terminal device. The communication mode may include a MIMO mode based on beamforming, or an OAM mode, which is not limited in the disclosure.

It may be understood that there may be one or more communication modes supported by the network access device.

Optionally, the first indication information may be sent to the network device based on a PUSCH.

Optionally, the network device may receive the first indication information via a single antenna port. Since the robustness of the single antenna port is strongest, when the network device does not know a communication mode usable by the access network device, and the access network device does not know a communication mode usable by the network device, underlying transmission may be performed (i.e. using the single antenna port), which ensures the reliable transmission of the second indication information even if the single antenna port is used.

Optionally, the communication mode supported by the access network device may be indicated by a preset bit value in the first indication information. For example, when the preset bit value is 01, it indicates that the access network device only supports the MIMO mode; when the preset bit value is 10, it indicates that the access network device only supports the OAM mode; or when the preset bit value is 11, it indicates that the access network device supports the MIMO mode and the OAM mode, which will not be limited here.

By implementing embodiments of the disclosure, the access network device sends the first indication information for indicating the communication mode supported by the access network device itself, and the network device may determine the communication mode to be used according to the communication mode supported by the access network device in the first indication information and the communication mode supported by the network device itself, after receiving the first indication information. The optimal communication mode may be adopted in different scenarios, which further improves the capability of the communication system, and enhances the data transmission performance.

As illustrated in FIG. 7, FIG. 7 is a flowchart illustrating another method for determining a communication mode according to embodiments of the present disclosure. The method is performed by an access network device. As illustrated in FIG. 7, the method may include but not limited to the following steps.

At step 701, first indication information is sent. The first indication information indicates a communication mode supported by the access network device.

In the embodiment, the implementation process of step 701 may refer to the detailed description of any one embodiment in the disclosure, which will not be repeated here.

At step 702, second indication information is received. The second indication information indicates a communication mode supported by a network device.

In the disclosure, when the access network device and the network device support a plurality of types of communication modes, the network device may send the communication mode supported by the network device itself to the access network device, so that the access network device recommends an appropriate communication mode according to a channel condition. In this way, a communication mode with the high data transmission efficiency may be selected according to the channel condition, which further enhances the data transmission performance of a communication system.

In the disclosure, after the network device receives the first indication information, the communication mode supported by the access network device is determined according to the first indication information. When the access network device and the network device support the plurality of types of communication modes, the network device send the second indication information to the access network device, and the access network device may receive the second indication information and parse the second indication information, to determine the communication mode supported by the network device.

Optionally, a manner in which the second indication information indicates the communication mode supported by the network device may be the same as or different from a manner in which the first indication information indicates the communication mode supported by the access network device, which will not be limited in the disclosure.

At step 703, a recommended communication mode is determined according to a current channel state and the communication mode supported by the network device.

In the disclosure, after the access network device receives the second indication information, the communication mode supported by the network device may be determined according to the second indication information, and the access network device may determine a state of each channel via channel monitoring, to determine according to the state of each channel a communication mode with the best performance from the communication mode supported by the network device and the communication mode supported by the access network device itself as the recommended communication mode.

For example, the network device supports the MIMO mode and the OAM mode, and the access network device also supports the MIMO mode and the OAM mode. When the access network device monitors that the channel is multipath, that is, the current channel state is not the ideal channel state of the OAM mode, and the performance of the OAM communication system will degrade under the non-ideal condition, it may be thus determined that the MIMO mode is the recommended communication mode.

Alternatively, if the network device supports the MIMO mode and the OAM mode and the access network device also supports the MIMO mode and the OAM mode, when the access network device monitors the channel is that the channel model between the access network device and the network device is a los, and the antenna between the access network device and the network device is in a coaxial parallel state, in which case the performance of the OAM communication mode is better, it may be thus determined that the communication mode recommended is the OAM mode, and the third indication information may indicate to the network device that the communication mode recommended is the OAM mode.

At step 704, third indication information is sent. The third indication information indicates a communication mode recommended by the access network device.

In the disclosure, the access network device may determine the third indication information according to the communication mode recommended, after determining the communication mode recommended, and send the third indication information to the network device.

Optionally, a manner in which the third indication information indicates the communication mode recommend by the network device may be the same as or different from a manner in which the first indication information indicates the communication mode supported by the access network device, which will not be limited in the disclosure.

By implementing embodiments of the disclosure, the network device sends the first indication information for indicating the communication mode supported by the access network device first, and when the network device and the access network device itself support the plurality of types of communication modes, the access network device may receive the second indication information for indicating the communication mode supported by the network device from the network device. Then, the access network device may determine the communication mode recommended according to the channel condition, the communication mode supported by the network device and the communication mode supported by the access network device itself. Therefore, the optimal communication mode may be determined according to the specific channel state, which further improves the capability of the communication system, and enhances the data transmission performance.

As illustrated in FIG. 8, FIG. 8 is a flowchart illustrating another method for determining a communication mode according to embodiments of the present disclosure. The method is performed by an access network device. As illustrated in FIG. 8, the method may include but not limited to the following steps.

At step 801, first indication information is sent. The first indication information indicates a communication mode supported by the access network device.

In the embodiment, the implementation process of step 801 may refer to the detailed description of any one embodiment in the disclosure, which will not be repeated here.

At step 802, fourth indication information is received. The fourth indication information indicates performing data transmission based on a communication mode to be used.

In the disclosure, after the communication mode to be used is determined, the network device may send the fourth indication information to the access network device, to indicate the access network device to perform data transmission based on the communication mode to be used. After the access network device receives the fourth indication information, data transmission may be performed according to the communication mode indicated by the fourth indication information .

Optionally, a manner in which the fourth indication information indicates the communication mode to be used may be the same as or different from a manner in which the first indication information indicates the communication mode supported by the access network device, which will not be limited in the disclosure.

Optionally, the access network device may start data transmission with the network device using the indicated communication mode after receiving the fourth indication information, or, may start data transmission with the network device using the indicated communication mode at a specified moment after receiving the fourth indication information, which will not be limited in the disclosure.

Optionally, the access network device may further receive fifth indication information. The fifth indication information indicates a use occasion of the communication mode to be used. The use occasion in the fifth indication information may be a specific moment, or a specific time unit. The time unit may be a slot, a frame or a mini-slot, which will not be limited in the disclosure.

For example, when the use occasion in the fifth indication information is a certain moment t, the access network device may start to perform data transmission with the network device using the indicated communication mode at the moment t. Alternatively, when the use occasion in the fifth indication information includes n slots, the access network device may start to perform data transmission with the network device using the indicated communication mode after the n slots.

Optionally, the fourth indication information and the fifth indication information may be the same piece of indication information, or two different pieces of indication information, that is, the network device may simultaneously indicate the communication mode to be used and the use occasion of the communication mode via one piece of indication information, which will not be limited in the disclosure.

By implementing embodiments of the disclosure, the access network device performs data transmission directly using the communication mode to be used indicated by the fourth indication information. In this way, the communication mode may be rapidly determined, and the stable operation of the communication system may be ensured, which further enhances the capability of the communication system.

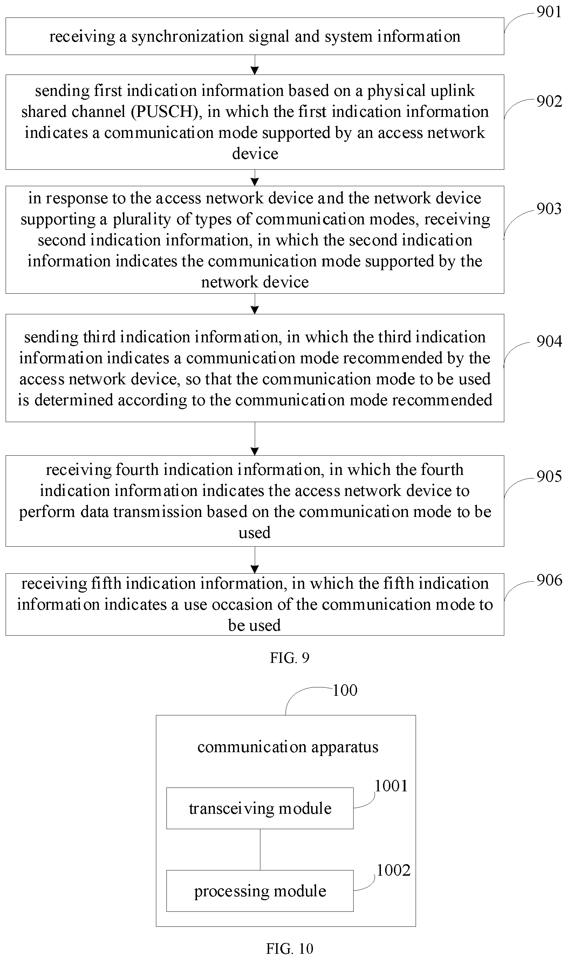

As illustrated in FIG. 9, FIG. 9 is a flowchart illustrating another method for determining a communication mode according to embodiments of the present disclosure. As illustrated in FIG. 9, the method may be performed by an access network device, and may include but not limited to the following steps.

At step 901, a synchronization signal and system information are received.

The system information may include a MIB and a series of SIBs, which will not be limited in the disclosure.

In the disclosure, the network device may send the synchronization signal and the system information via the single antenna port. When the access network device receives the synchronization signal and the system information, an access operation may be performed according to the synchronization signal and the system information.

At step 902, first indication information is sent based on a PUSCH. The first indication information indicates a communication mode supported by an access network device.

In the disclosure, after the access network device receives the synchronization signal and the system information from the network device, the synchronization signal may also be analyzed to determine synchronization information, and the system information may be analyzed, to determine initial access information, and obtain basic information of other system information, for example, physical layer information required for system information, that is, configuration information of a control resource set (i.e.,CORESET#0). Then, uplink timing synchronization with the network device may be performed based on a PRACH, and first indication information for indicating the communication mode supported by the access network device may be sent to the network device based on the PUSCH.

At step 903, in response to the access network device and the network device supporting a plurality of types of communication modes, second indication information is received. The second indication information indicates the communication mode supported by the network device.

At step 904, the third indication information is sent. The third indication information indicates a communication mode recommended by the access network device. Then, the communication mode to be used is determined based on the recommended communication mode.

At step 905, fourth indication information is received. The fourth indication information indicates the access network device to perform data transmission based on the communication mode to be used.

At step 906, fifth indication information is received. The fifth indication information indicates a use occasion of the communication mode to be used.

In the embodiment, the implementation processes of steps 903 to 906 may refer to the detailed descriptions of any one embodiment in the disclosure, which will not be repeated here.

By implementing embodiments of the disclosure, the access network device may establish a connection with the network device based on the synchronization signal and the system information, after receiving the synchronization signal and the system information from the network device, and send the first indication information based on the PUSCH. In this way, the anti-interference capability of the channel may be improved, and further the accuracy of information received by the communication system may be enhanced.

As illustrated in FIG. 10, FIG. 10 is a structural diagram illustrating a communication apparatus 100 according to embodiments of the present disclosure. The communication apparatus 100 as illustrated in FIG. 10 may include a transceiving module 1001 and a processing module 1002. The transceiving module 1001 may include a transmitting module and/or a receiving module. The transmitting module is configured to implement a transmitting function, the receiving module is configure to implement a receiving function, and the transceiving module 1001 may implement the transmitting function and/or the receiving function.

It may be understood that the communication apparatus 100 may be a network device, an apparatus in the network device, or an apparatus capable of being matched and used with the network device.

When the communication apparatus 100 is located at a network device side, the transceiving module 1001 is configured to receive first indication information from an access network device. The first indication information indicates a communication mode supported by the access network device. The processing module 1002 is configured to determine a communication mode to be used according to the communication mode supported by the access network device and a communication mode supported by a network device.

Optionally, the processing module 1002 is specifically configured to: in response to the access network device supporting one type of communication mode, determine the communication mode to be used according to the communication mode supported by the access network device and the communication mode supported by the network device.

Optionally, the transceiving module 1001 is specifically configured to: in response to the access network device and the network device supporting a plurality of types of communication modes, send second indication information, in which the second indication information indicates the communication mode supported by the network device; and receive third indication information, in which the third indication information indicates a communication mode recommended by the access network device. The processing module is specifically configured to determine the communication mode to be used according to the communication mode recommended.

Optionally, the transceiving module 1001 is specifically configured to: send the second indication information via a single antenna port.

Optionally, the transceiving module 1001 is specifically configured to: send fourth indication information. The fourth indication information indicates the access network device to perform data transmission based on the communication mode to be used.

Optionally, the transceiving module 1001 is specifically configured to: send fifth indication information. The fifth indication information indicates a use occasion of the communication mode to be used.

Optionally, the transceiving module 1001 is specifically configured to: receive the first indication information from the access network device based on a PUSCH.

In the communication apparatus provided in the disclosure, the network device may determine the communication mode to be used according to the communication mode supported by the access network device and the communication mode supported by the network device itself in the first indication information after receiving the first indication information. In this way, the optimal communication mode may be adopted in different scenarios, which further improves the capability of the communication system, and enhances the data transmission performance.

It may be understood that the communication apparatus 100 may be an access network device, an apparatus in the access network device, or an apparatus capable of being used with the access network device.

When the communication apparatus 100 is located at an access network device side, the transceiving module 1001 is configured to send first indication information. The first indication information indicates a communication mode supported by the access network device.

Optionally, the transceiving module 1001 is specifically configured to: receive second indication information. The second indication information indicates a communication mode supported by the network device. The processing module 1002 is configured to determine a recommended communication mode according to a current channel state and the communication mode supported by the network device. The transceiving module 1001 is further configured to: send third indication information. The third indication information indicates a communication mode recommended by the access network device.

Optionally, the transceiving module 1001 is specifically configured to: receive fourth indication information. The fourth indication information indicates performing data transmission based on a communication mode to be used.

Optionally, the transceiving module 1001 is specifically configured to: receive fifth indication information. The fifth indication information indicates a use occasion of the communication mode to be used.

Optionally, the transceiving module 1001 is specifically configured to: send the first indication information based on a PUSCH.

Optionally, the transceiving module 1001 is specifically configured to: send the first indication information via a single antenna port.

In the communication apparatus provided in the disclosure, the access network device sends the first indication information for indicating the communication mode supported by the access network device itself. The network device may determine the communication mode to be used according to the communication mode supported by the access network device and the communication mode supported by the network device itself in the first indication information after receiving the first indication information. In this way, the optimal communication mode may be adopted in different scenarios, which further improves the capability of the communication system, and enhances the data transmission performance.

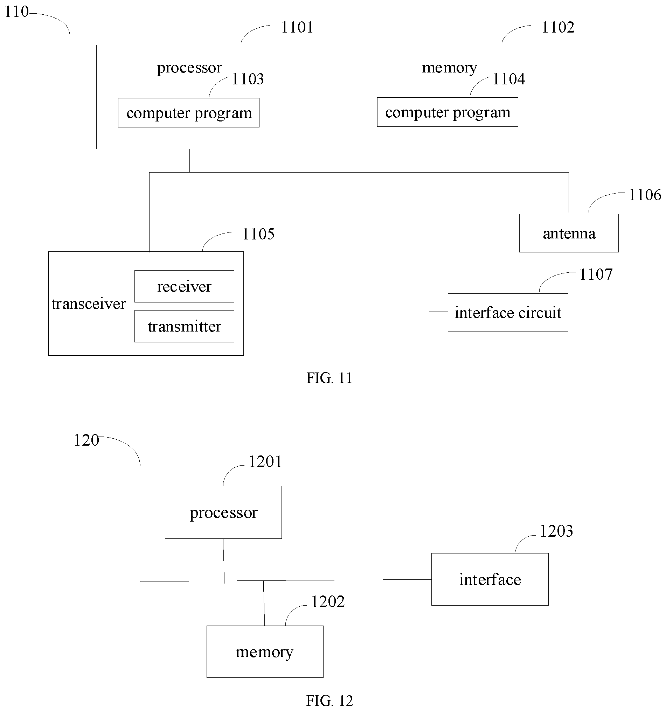

Referring to FIG. 11, FIG. 11 is a structural diagram illustrating another communication device 110 according to embodiments of the present disclosure. The communication device 100 may be a network device, a terminal device (a first terminal device in the above method embodiments), or a chip, a system on chip or a processor that supports the network device to implement the method, or a chip, a system on chip or a processor that supports the terminal device to implement the method. The device may be configured to implement the method described in the method embodiments, and the details may refer to the above descriptions in the method embodiments.

The communication device 110 may include one or more processors 1101. The processor 1101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device 110 may further include one or more memories 1102 storing a computer program 1104. The processor 1101 executes the computer program 1104 so that the communication device 110 performs the method as described in the above method embodiments. Optionally, the memory 1102 may further store data. The communication device 110 and the memory 1102 may be independently configured or integrated together.

Optionally, the communication device 110 may further include a transceiver 1105 and an antenna 1106. The transceiver 1105 may be referred to as a transceiving unit, a transceiver or a transceiving circuit, which may be configured to achieve a transceiving function. The transceiver 1105 may include a receiver and a transmitter. The receiver may be referred to as a receiver machine or a receiving circuit, etc., for implementing a receiving function; the transmitter may be referred to as a transmitter machine or a transmission circuit, etc. for implementing a transmitting function.

Optionally, the communication device 110 may further include one or more interface circuits 1107. The interface circuit 1107 is configured to receive code instructions and transmit the code instructions to the processor 1101. The processor 1101 makes the code instructions to run so that the communication device 110 performs the method according to the above method embodiment.

When the communication device 110 is a network device, the processor 1101 is configured to execute step 202 in FIG. 2; step 304 in FIG. 3; and step 402 in in FIG. 4.

When the communication device 110 is an access network device (a first terminal device in the above method embodiments), the transceiver 1105 is configured to execute step 601 in FIG. 6; step 701, step 702, step 703 and step 704 in FIG. 7; step 801, step 802 and step 803 in FIG. 8; and step 901, step 902, step 903, step 904, step 905 and step 906 in FIG. 9.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may store a computer program 1103. The computer program 1103 is running on the processor 141 so that the communication device 110 performs the method as described in the above method embodiments. The computer program 1103 may be solidified in the processor 1101, in which case the processor 1101 may be implemented by hardware.

In an implementation, the communication device 110 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or an access network device (for example, a terminal device in the above method embodiments), but the scope of the communication device described in the present disclosure is not limited thereto, and a structure of the communication device may not be subject to FIG. 11. The communication device may be a stand-alone device or may be a part of a large device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

In the case that the communication device may be a chip or a system on chip, please refer to a structural diagram of a chip as illustrated in FIG. 12. The chip illustrated in FIG. 12 may include a processor 1201 and an interface 1203. There may be one or more processors 1201, and there may be a plurality of interfaces 1203.

In the case that the chip is configured to implement a function of a network device in embodiments of the disclosure, the interface 1203 is configured to execute step 201 in FIG. 2; step 301, step 302 and step 303 in FIG. 3; step 401 and step 403 in FIG. 4; step 501, step 503, step 505 and step 506 in FIG. 5.

In the case that the chip is configured to implement a function of the access network device in embodiments of the disclosure, the interface 1203 is configured to execute step 601 in FIG. 6; step 701, step 702, step 703 and step 704 in FIG. 7; step 801, step 802 and step 803 in FIG. 8; or step 901, step 902, step 903, step 904, step 905 and step 906 in FIG. 9.

Optionally, the chip further includes a memory 1203. The memory 1203 is configured to save a necessary computer program and data.

Those skilled in the related art may understand that, various illustrative logical blocks and steps listed in embodiments of the present disclosure, may be implemented by an electronic hardware, a computer software, or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as going beyond the protection scope of embodiments of the present disclosure.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one to another computer-readable storage medium, for example, the computer program may be transferred from a website, a computer, a server, or a data center to another website, another computer, another server or another data center through wired means (such as a coaxial cable, an optical fiber, a digital subscriber line (DSL)) or wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a high-density digital video disc, DVD), or semiconductor media (e.g., a solid state disk, SSD) etc.

Those skilled in the art may understand that the first, second, and other numerical numbers involved in the disclosure are only for convenience of description and are not used to limit the scope of the embodiments of the disclosure and also indicate a sequential order.

The term "at least one" in the disclosure can also be described as one or more, and "a plurality of' may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein can be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and conciseness of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for determining a communication mode, comprising:
receiving first indication information from an access network device, wherein the first indication information indicates a communication mode supported by the access network device; and
determining a communication mode to be used according to the communication mode supported by the access network device and a communication mode supported by a network device.

2. The method according to claim 1, wherein determining the communication mode to be used according to the communication mode supported by the access network device and the communication mode supported by the network device comprises:
in response to the access network device supporting one type of communication mode, determining the communication mode to be used according to the communication mode supported by the access network device and the communication mode supported by the network device.

3. The method according to claim 1, wherein determining the communication mode to be used according to the communication mode supported by the access network device and the communication mode supported by the network device comprises:
in response to the access network device and the network device supporting a plurality of types of communication modes, sending second indication information, wherein the second indication information indicates the communication mode supported by the network device;
receiving third indication information, wherein the third indication information indicates a communication mode recommended by the access network device; and
determining the communication mode to be used according to the communication mode recommended.

4. The method according to claim 3, further comprising:
sending the second indication information via a single antenna port.

5. The method according to any one of claims 1 to 4, further comprising:
sending fourth indication information, wherein the fourth indication information indicates the access network device to perform data transmission based on the communication mode to be used.

6. The method according to claim 5, further comprising:
sending fifth indication information, wherein the fifth indication information indicates a use occasion of the communication mode to be used.

7. The method according to any one of claims 1 to 6, wherein receiving the first indication information from the access network device comprises:
receiving the first indication information from the access network device based on a physical uplink shared channel (PUSCH).

8. A method for determining a communication mode, comprising:
sending first indication information, wherein the first indication information indicates a communication mode supported by an access network device.

9. The method according to claim 8, further comprising:
receiving second indication information, wherein the second indication information indicates a communication mode supported by a network device;
determining a recommended communication mode according to a current channel state and the communication mode supported by the network device; and
sending third indication information, wherein the third indication information indicates a communication mode recommended by the access network device.

10. The method according to claim 8 or 9, further comprising:
receiving fourth indication information, wherein the fourth indication information indicates performing data transmission based on a communication mode to be used.

11. The method according to claim 10, further comprising:
receiving fifth indication information, wherein the fifth indication information indicates a use occasion of the communication mode to be used.

12. The method according to any one of claims 8 to 11, wherein sending the first indication information comprises:
sending the first indication information based on a physical uplink shared channel (PUSCH).

13. The method according to any one of claims 8 to 11, wherein sending the first indication information comprises:
sending the first indication information via a single antenna port.

14. A communication apparatus, comprising:
a transceiving module, configured to receive first indication information from an access network device, wherein the first indication information indicates a communication mode supported by the access network device; and
a processing module, configured to determine a communication mode to be used according to the communication mode supported by the access network device and a communication mode supported by a network device.

15. The apparatus according to claim 14, wherein the processing module is specifically configured to:
in response to the access network device supporting one type of communication mode, determine the communication mode to be used according to the communication mode supported by the access network device and the communication mode supported by the network device.

16. The apparatus according to claim 14, wherein the transceiving module is specifically configured to:
in response to the access network device and the network device supporting a plurality of types of communication modes, send second indication information, wherein the second indication information indicates the communication mode supported by the network device; and
receive third indication information, wherein the third indication information indicates a communication mode recommended by the access network device; and
the processing module is specifically configured to determine the communication mode to be used according to the communication mode recommended.

17. The apparatus according to claim 16, wherein the transceiving module is specifically configured to:
send the second indication information via a single antenna port.

18. The apparatus according to any one of claims 14 to 17, wherein the transceiving module is specifically configured to:
send fourth indication information, wherein the fourth indication information indicates the access network device to perform data transmission based on the communication mode to be used.

19. The apparatus according to claim 18, wherein the transceiving module is specifically configured to:
send fifth indication information, wherein the fifth indication information indicates a use occasion of the communication mode to be used.

20. The apparatus according to any one of claims 14 to 19, wherein the transceiving module is specifically configured to:
receive the first indication information from the access network device based on a physical uplink shared channel (PUSCH).

21. A communication apparatus, comprising:
a transceiving module, configured to send first indication information, wherein the first indication information indicates a communication mode supported by an access network device.

22. The apparatus according to claim 21, wherein the transceiving module is specifically configured to:
receive second indication information, wherein the second indication information indicates a communication mode supported by a network device;
wherein a processing module is configured to determine a recommended communication mode according to a current channel state and the communication mode supported by the network device; and
send third indication information, wherein the third indication information indicates a communication mode recommended by the access network device.

23. The apparatus according to claim 21 or 22, wherein the transceiving module is specifically configured to:
receive fourth indication information, wherein the fourth indication information indicates performing data transmission based on a communication mode to be used.

24. The apparatus according to claim 23, wherein the transceiving module is specifically configured to:
receive fifth indication information, wherein the fifth indication information indicates a use occasion of the communication mode to be used.

25. The apparatus according to any one of claims 21 to 24, wherein the transceiving module is specifically configured to:
send the first indication information based on a physical uplink shared channel (PUSCH).

26. The apparatus according to any one of claims 21 to 24, wherein the transceiving module is specifically configured to:
send the first indication information via a single antenna port.

27. A communication device, comprising a processor and a memory storing a computer program, wherein when the computer program is executed by the processor, the communication device is caused to perform the method according to any one of claims 1 to 7.

28. A communication device, comprising a processor and a memory storing a computer program, wherein when the computer program is executed by the processor, the communication device is caused to perform the method according to any one of claims 8 to 13.

29. A computer-readable storage medium storing instructions, wherein when the instructions are executed, the method according to any one of claims 1 to 7 is implemented.

30. A computer-readable storage medium storing instructions, wherein when the instructions are executed, the method according to any one of claims 8 to 13 is implemented.
